# EUROPEAN PATENT SPECIFICATION

(11) **EP 3 464 046 B1**
(45) Date of publication and mention of the grant of the patent: **02.08.2023**
(21) Application number: 17737062.4
(22) Date of filing: 05.06.2017
(51) Int. Cl.: B63B 1/14, B63B 39/00, B63B 43/04

(54) **A SYSTEM FOR DAMPING MOVEMENTS OF A LOAD OVER A FLUCTUANT WATERY ENVIRONMENT AND A VEHICLE COMPRISING SAME**
SYSTEM ZUR BEWEGUNGSDÄMPFUNG EINER LAST ÜBER EINEM FLUKTUIERENDEN WASSERUMFELD UND FAHRZEUG DAMIT
SYSTÈME D'AMORTISSEMENT DES MOUVEMENTS D'UNE CHARGE SUR UN ENVIRONNEMENT AQUEUX FLUCTUANT ET VÉHICULE COMPRENANT CELUI-CI

(30) Priority: 06.06.2016 GB 201609855
(43) Date of publication of application: 10.04.2019
(73) Proprietor: Yariv Civil Engineering (1989) Ltd., 6744909 Tel Aviv-Yafo (IL)
(72) Inventor: BRIMBERG, Itzhac, 5346442 Givataim (IL)
(74) Representative: Balder IP Law, S.L.
(86) International application number: PCT/IL2017/050626
(87) International publication number: WO 2017/212482

(56) References cited:
- WO-A1-2008/040099
- WO-A1-2016/081990
- FR-A1- 2 607 097
- US-A- 2 313 295
- US-A- 2 678 017
- US-A- 3 592 154

## Description

### FIELD OF THE INVENTION

The present invention generally relates to devices, apparatuses, systems and mechanisms for damping fluctuations of loads over fluctuant watery environments and crafts including such systems, devices, apparatuses or mechanism.

### BACKGROUND OF THE INVENTION

Watercrafts and other bodies that are designated for floating or sailing over fluctuant watery environments such as over the seas, lakes, rivers and the like, often jiggle and wiggle in direct response to the fluctuations (waves) of the water causing onboard load damages and often causing seasickness for onboard people. In more severe cases, in which the fluctuations are extreme (e.g. waves are extremely high) the watercraft can turn and sink.

There are several available solutions for damping these fluctuations. For example:

U.S. 2,313,295 to Jean Herail, et al., describes a buoyancy system comprising a number of mountings, pivotally connected to form a stabilizing device on a body of water.

U.S. 2,678,017 to Collins describes a structure for stabilizing a platform on a water surface, the structure having vertical posts connected to balancing beams.

U.S. 3,592,154 describes a waterborne craft support assembly having a plurality of vertical structure supports connected to roller shaped floats.

International patent application publication no. WO 2008/040099 to Plamen describes a floating platform having floating balloons to create a lifting force connected to transverse levers.

Patent application no. FR2607097 to Delchambre describes a device allowing sail or engine navigation with the aid of several floats joined in pairs by a beam acting as a support for the craft. The connections between the floats and the beam, and then between the beam and the craft, are flexible and articulated. It consists of several floats, which include at least two mortices, a pin, two beams acting as tenons sliding in the mortices, forming one body with the frame. The beams include, at their ends, two inclination (dip) limiters intended to keep the floats at a suitable angle of heel.

International patent application publication no. WO 2007070674 teaches pairs of counter-rotating regenerative flywheels, which create reinforcing torques when electrical energy is transferred between the members of a pair. The transfer, of electricity can be controlled to counter undesired oscillations of a watercraft. Motion of the watercraft is sensed by a sensor system, resolved into components and then the flywheels are controlled to apply torque that counteracts the undesired oscillation. Preferably, the motion of the watercraft is evaluated by the sensor in brief increments of one-tenth of a second or less.

Patent application no. FR2906216 teaches a device that has a spring and a damper associated to two parallel sliding systems. The sliding systems are fixed between an arm head and a rotation axle fixed on an arm base. An anti-rotation unit is fixed between the axle and the head. The sliding systems are slid for provoking compression and releasing of the spring and the damper during navigation so as to absorb the impact at a handle bar of a personal watercraft.

Patent application no. JPH0872783 teaches a wave impact buffering mechanism for a catamaran watercraft. The catamaran ship is provided with a pair of pitching restraining horizontal fins extending left and right symmetrically toward the center line of the hull respectively from the lower ends of a pair of left and right hulls provided to project downward from the left and right broadsides of the bow bottom part of the catamaran ship, a plurality of air jetting small diameter apertures opened at an equal interval along the outer periphery of the lower surface of the horizontal fin 4a are arranged.

### SUMMARY OF THE INVENTION

The present invention provides a damping system for damping an oscillation of a load configured to travel on a fluctuant water surface, such that a direction of travel defines a front, a back, and sides of the load, the load also being referred to hereinbelow as a vehicle unit. The system includes two buoyancy systems, connectable to each side of the vehicle unit and located opposite to one another, each buoyancy system having a front pair of buoys and a rear pair of buoys, each pair of buoys connected by a lower frame to an upper frame. Each buoy may be pivotally connected to its lower frame by a buoy axle, and each lower frame may be pivotally connected to its upper frame by a lower frame hinge. Each upper frame is connected to a central connector of its respective buoyancy system, which is connected to the vehicle unit. The buoys of each buoyancy system are arranged in line one after each other in the direction of travel. Each buoy is of the same oval shape and size. The upper frames and the lower frame hinges are above the lower frames. When the damping system is connected to the vehicle unit, each buoyancy system extends further forward than the front and extends further back than the back of the vehicle unit.

According to some embodiments, one or more of the upper frames are rigidly or pivotally connectable to the vehicle unit by the central connector.

According to some embodiments, an angular position of the central connector may be controlled by mechanical or electronic means.

According to some embodiments, the buoyancy systems are located at an equal distance from the center of mass of the vehicle unit when the damping system is connected to the vehicle unit.

According to some embodiments, the buoyancy systems are symmetrically located about the center of mass of the damping system.

According to some embodiments, at least two buoyancy systems are located at unequal distances from the center of mass of the vehicle unit when the damping system is connected to the vehicle unit.

According to some embodiments, each buoy is pivotally connected to the lower frame such that a first wavelength of the oscillation is damped and the lower frame is pivotally connected to the upper frame such that a second wavelength of the oscillation is damped.

The present invention also provides a watercraft designed for damping an oscillation of a vehicle unit on a fluctuant water surface, the watercraft including the vehicle unit and a damping system, as described above.

### BRIEF DESCRIPTION OF THE DRAWINGS

**Figures 1A** and **1B** show a damping system for damping movements of a load placed thereover or connected thereto, which is not part of the present invention, such as a vehicle or a cargo over a fluctuant watery environment, having four buoyancy systems, each including two buoys, according to some embodiments of the invention: **Fig. 1A** shows an elevated view of the damping system; and **Fig. 1B** shows an isometric perspective view of the damping system.
**Fig. 2** shows a watercraft with a damping system integrated therewith, according to other embodiments of the present invention.
**Fig. 3** shows a damping system for damping movements of a load placed thereover having two buoyancy systems, each including a single buoy, according to some embodiments of the invention.
**Fig. 4** shows a diagram of an estimated damping of a sinusoidal oscillation wave (continuous line) done by a damping system according to some embodiments of the present invention; the actual oscillations that are estimated to be measured at the center of mass of the load carried by the damping system is illustrated by the broken line showing a fraction of the amplitude of the sinusoidal oscillation wave.

### DETAILED DESCRIPTION

In the following detailed description of various embodiments, reference is made to the accompanying drawings that form a part thereof, and in which are shown by way of illustration specific embodiments in which the invention may be practiced. It is understood that other embodiments may be utilized and structural changes may be made without departing from the scope of the present invention.

The present invention provides systems for damping movements of a load placed or connected thereover in a fluctuant watery environment, and configured for travel such as water or air crafts with such damping systems.

According to some embodiments of the invention, the damping system includes several buoyancy systems, each buoyancy system having at least one buoy. According to the present invention, the buoys of the damping system directly or indirectly connect to the load or to a base structure that carries the load in an articular manner e.g. via joint connectors, for allowing the buoys to mechanically respond to the oscillations (fluctuations) of the water which will cause the damping of the fluctuations of the load.

The damping system is designed such as to have the buoys freely or partially freely rotate about an axis in response to the water fluctuations/ oscillations in the respective location thereof over the water. Each buoyancy system is positioned at a distance from the center of mass of the load such they are spread from the spatial borders of the load and/or carrier thereof. Due to this separation and spreading of each buoy a different fluctuation is applied over each buoy. Each is located over a different positioning over the incoming wave(s) and therefore the buoys of all the buoyancy systems will dissipate the waves' energy, damping thereby the oscillatory energy that would have otherwise been applied over the load center of mass. This will allow dramatically reducing the oscillation energy delivered to the load.

The geometry and the locations of the buoyancy systems in respect to the load or carrier thereof, the number thereof, the properties of the buoys thereof etc. can be adapted to the particular load type and optionally to the carrier properties and type that are to be used.

According to some embodiments of the invention, the damping system further includes a base structure fixedly or movably connected to the connectors of the buoys systems for carrying the load thereover.

According to some embodiments, each buoyancy system movably connects to this base structure e.g. via at least one bearing or any other articulation.

According to some embodiments, the buoyancy systems may be located at equal distances from the center of mass of the load or of the entire structure of the systems and the load. For example, the buoyancy systems can be symmetrically arranged around the center of mass of the load.

In other embodiments, the buoyancy systems are located at different distances from the center of mass of the load or of the entire structure of the systems and the load.

The buoys of the damping system may have any size or shape that is adapted to improve damping in respect to the distance thereof from the load center of mass, depending on the number of buoys used and spatial arrangement thereof.

For instance each buoy may be pivotally rotated over an axis such as a rod. The axis may be connected to crank shafts connectors, one at each edge thereof for connecting thereto fixedly or pivotally/movably to a frame base structure that is configured for placing the load thereover or connecting the load thereto.

Since the system and load are configured for being used in a fluctuant watery environment such as an ocean, a sea, a river, a lake and the like, the load may be any kind of element, vehicle or system that can either float even without the damping system or only once placed over or connected to the damping system.

The present invention further provides a vehicle such as a watercraft or an aircraft designed to land and optionally also sail or float on water, having the damping system integrated therewith. In this case the load may be the vehicle body and inner equipment thereof. In this case the entire integrated vehicle includes the vehicle unit e.g. the boat, aircraft or raft body and the damping system.

The vehicle may be a motorized vehicle such as a motorboat, an aircraft, a speedboat, a steamboat and the like or a non-motorized vehicle such as a raft, a sailboat, a pedal boat and the like.

The vehicle unit may be buoyant regardless of the damping system thereof or may only be able to float on water once connected to or placed over the damping system in which case also serving as a float mechanism for the craft. The vehicle may also be a mono-hull or a multi-hull watercraft. Additional stabilizing or buffering means may be added to the vehicle and/or damping system for improving stability thereof over the water environment such as sets of spring connectors for absorbing some of the movements' impact to prevent abrupt tilting or elevation of the load/craft.

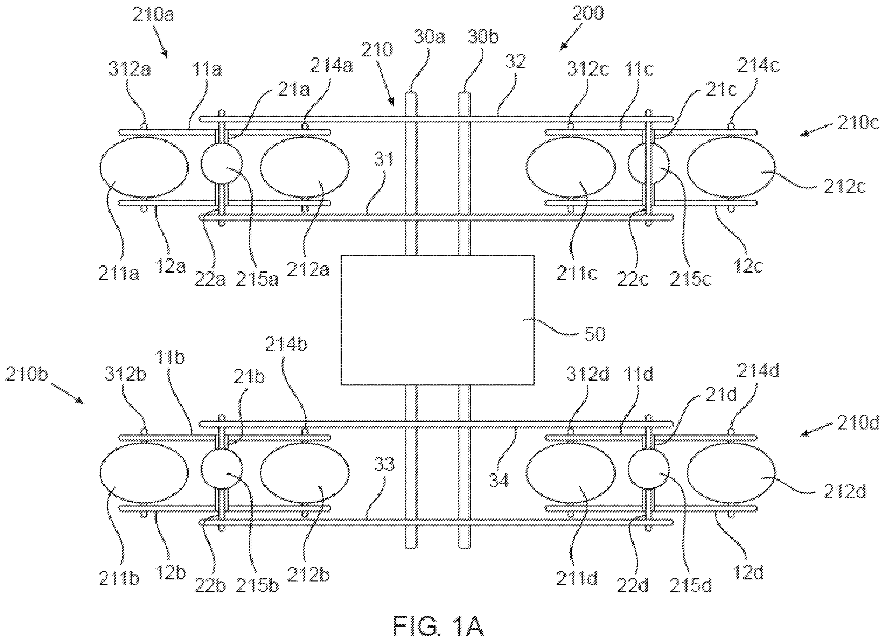

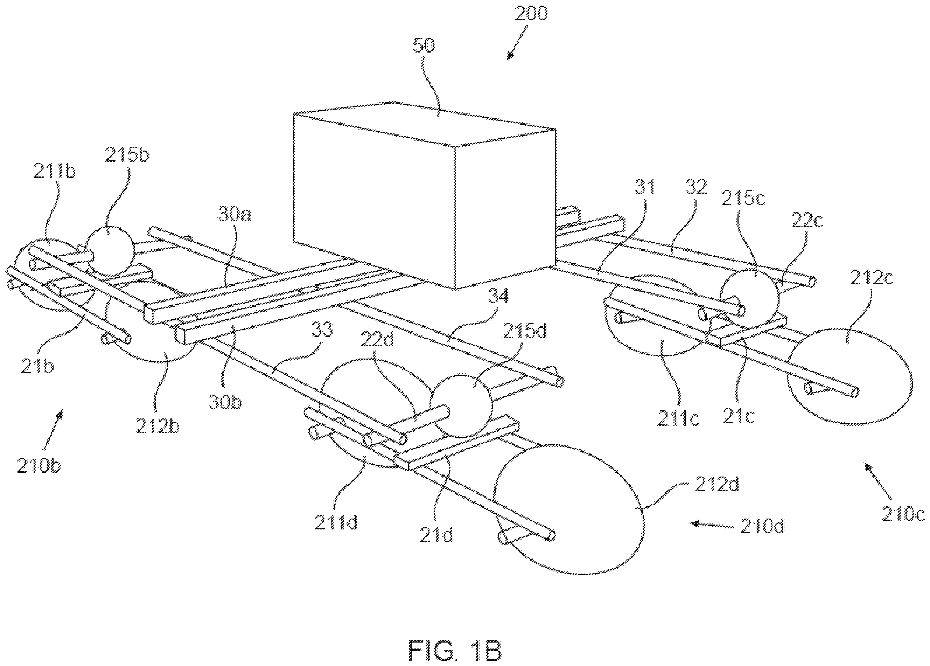

Reference is now made to **Figures 1A** and **1B** illustrating a damping system **200** for carrying thereover a load **50** such as a cargo container and/or other vehicle or connecting to a vehicle, which is not part of the present invention. The damping system **200** comprises four buoyancy systems **210a, 210b, 210c** and **210d:** two front buoyancy systems **210a** and **210b** and two rear buoyancy systems **210c** and **210d;** and a frame base structure **210** movably connected to the buoyancy systems **210a-210d** via bearings **215a, 215b, 215c,** and **215d** respectively.

Each of the buoyancy systems **210a-210d** has two buoys: the first front buoyancy system **210a** has buoys **211a** and **212a** pivotally connected to connectors **11a** and **12a** via axles **312a** and **214a** such that the axles **312a** and **214a** are parallel to one another. Similarly, the second front buoyancy system **210b** has buoys **211b** and **212b** pivotally connected to connectors **11b** and **12b** via axles **312b** and **214b** such that the axles **312b** and **214b** are parallel to one another. The first and second rear buoyancy systems **210c** and **210d** have buoys **211c** and **212c** and **211d** and **212d,** respectively, pivotally connected to connectors **11c** and **12c** and **11d** and **12d** via axles **312c** and **214c** and **312d** and **214d,** such that the axles **312c** and **214c** are parallel to one another and axles **312c** and **214d** are parallel to one another.

Each pair of buoys in each of the buoyancy systems **210a-210d** are arranged one after the other in a columnar manner and in this case have an oval shape and are of the same shape and sizes.

According to some embodiments, as illustrated in **Figures 1A** and **1B****,** the frame base structure **210** (shortly referred to herein as "the base structure" **210**) comprises multiple connecting members detailed as follows:

Multiple central connectors such as central connectors **30a** and **30**b over which the load is to be mounted or to which the load is to connect.

The first front buoyancy system **210a** movably connects to the first rear buoyancy system **210c** by having two bearings **215a** and **215c** movable associating with connecting members **31** and **32** connect to tow axles **22a** and **22c** of the bearings **215a** and **215c.** Each of the bearings **215a** and **215c** fixedly connects to a bar **21a** or **21c,** respectively. The bar **22a** of the first front buoyancy system **210a** connects to the connectors **11a** and **12a.** Similarly, the bar **22c** of the first rear buoyancy system **210c** connects to the connectors **11c** and **12c.**

Similarly, the second front buoyancy system **210b** movably connects to the second rear buoyancy system **210d** by having two bearings **215b** and **215d** movable associating with connecting members **33** and **34** connect to tow axles **22b** and **22d** of the bearings **215b** and **215d.** Each of the bearings **215b** and **215d** fixedly connects to a bar **21b** or **21d,** respectively. The bar **22b** of the second front buoyancy system **210b** connects to the connectors **11b** and **12b.** Similarly, the bar **22d** of the second rear buoyancy system **210d** connects to the connectors **11d** and **12d.**

The embodiments illustrated in **Figures 1A-1B** show a rectangular buoyancy systems' **210a-210d** symmetry. However, many other configurations may be used for implementing the main principles of the present invention such as using a non-even number of buoyancy systems each separated from each other at an equal distance and angle or at different distances and angles. The number of buoys in each buoyancy system may also vary. The buoys in each system may have the same size and/or shape or of different size and/or shape.

According to other embodiments of the invention, each buoyancy system may be directly connected to the load or to a carrier thereof such as a load platform or base structure and not connected directly to any of the other one or more buoyancy systems.

The geometry of the damping system i.e. the distance between each buoyancy system from the load and from one another, the size, shape and number of the buoys, the symmetry of the structure and the like may be adapted to each particular load i.e. for each load weight, size, shape, expected changes in these properties and the like as well as to the fluctuant watery environment. For example, for vehicles expected to sail over extreme fluctuation conditions in the ocean the distance between each buoyancy system and the load may be adapted to the optimum, expected wavelengths such as to achieve damping thereof for less than half wavelength expected energy. This means for instance, that the system will be designed such that for waves of up to ten meters height (in amplitude) the damping system is adapted to have the center of mass of the entire craft be impacted by energy equivalent to a two meters height, due to the damping effect of the damping system.

According to some embodiments, the damping system can be integrated with a watercraft or a vehicle that can transform into or be used as a watercraft such as a seaplane.

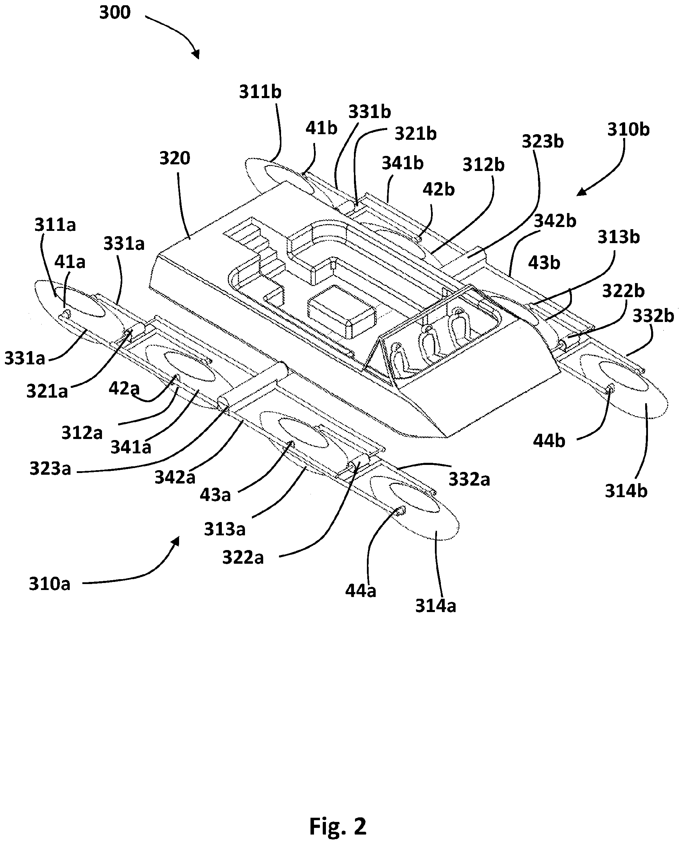

Reference is now made to **Fig. 2** showing a watercraft **300** having a damping system integrated therewith, according to some embodiments of the present invention. The watercraft **300** includes a vehicle unit **320,** which may have a boat-shaped body having seats, steering and optionally motorization means (not shown); and two buoyancy systems **310a** and **310b** connecting to the vehicle unit **320** via connectors **323a** and **323b** respectively.

In some embodiments the connectors **323a** and **323b** can be adjustable in length and/or in angle in respect to the vehicle unit **320** for changing the respective geometry of the buoyancy systems **310a** and **310b** to adapt to changing fluctuation environmental conditions, for instance. The watercraft **300** in this case may either be configured for a manually-controlled adjustment or via a controller that is electronically controlled for the mechanical adjustment. In other embodiments the connectors automatically adjust to environmental conditions either by mechanically responding to the forces applied thereover or by having sensors sense the environmental conditions and adapt the length and/or angle of the connectors **323a** and **323b** accordingly.

In other embodiments, the connectors **323a** and **323b** are non-adjustable and have a fixed angular positioning and length.

The length and/or angular positioning of the connectors **323a** and **323b** may be the same or different.

According to some embodiments, as illustrated in **Fig. 2****,** the buoyancy systems **310a** and **310b** are located opposite to one another at each side of the vehicle unit **320.** Each of the buoyancy systems **310a** and **310b** comprises four buoys: the first buoyancy system **310a** comprises buoys **311a, 312a, 313a** and **314a;** the second buoyancy system **310b** comprises buoys **311b, 312b, 313b** and **314b.**

In each buoyancy system each pair of buoys movably connects to a frame thereof in an articular manner: In the first buoyancy system **310a** the front pair of buoys **313a** and **314a** pivotally connect to a lower frame **332a** via axles **43a** and **44a,** which pivotally connect to an upper frame **342a** via a hinge **322a;** the rear pair of buoys **311a** and **312a** pivotally connect to a lower frame **331a** via axles **41a** and **42a,** which pivotally connect to an upper frame **341a** via a hinge **321a.**

Similarly, in the second buoyancy system **310b** the front pair of buoys **313b** and **314b** pivotally connect to a lower frame **332b** via axles **43b** and **44b,** which pivotally connect to an upper frame **342b** via a hinge **322b;** the rear pair of buoys **311b** and **312b** pivotally connect to a lower frame **331b** via axles **41b** and **42b,** which pivotally connect to an upper frame **341b** via a hinge **321b.**

In this illustration, shown in **Fig. 2****,** the buoys **311a-314a** and **311b-314b** have the same oval shape and size and are located in a columnar manner one after the other such that the axles of the buoys of each buoyancy system are parallel.

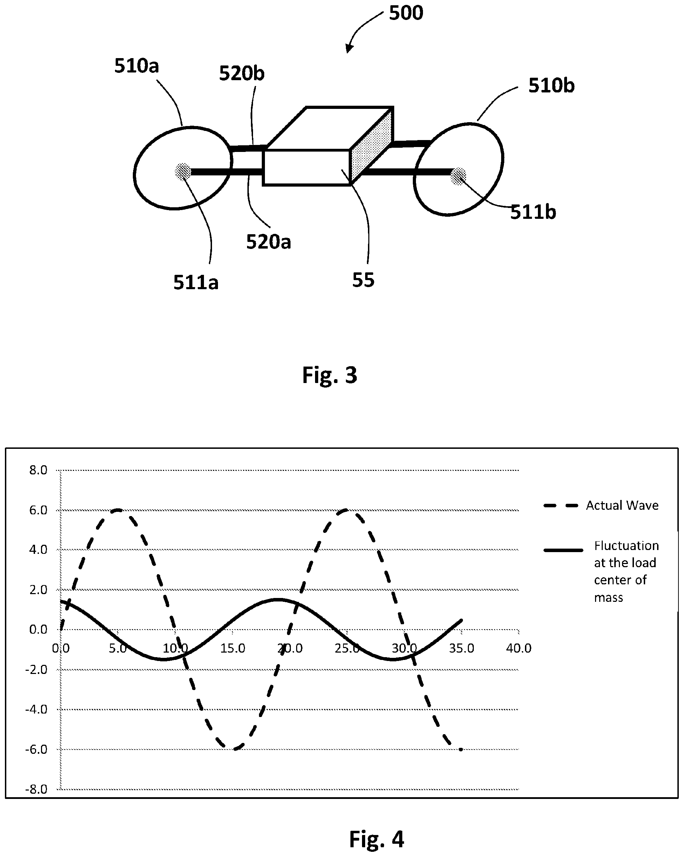

Reference is now made to **Fig. 3** which shows a very basic and simple configuration of a damping system **500,** according to some embodiments of the present invention. This damping system **500** comprises two buoyancy systems, each having a single buoy **510a** and **510b,** pivotally connected to one another via **axles 511a** and **511,** which connected to connectors **520a** and **520b** for carrying a load **55** thereover. Each buoy **510a** and **510b** can freely rotate about its axle **511a** and **511b,** respectively, in response to water fluctuations for damping the fluctuations applied over the load **55.**

**Fig. 4** shows a graph of an estimated damping of a sinusoidal oscillation wave (continuous line) done by a damping system according to the present invention; the actual oscillations that are estimated to be measured at the center of mass of the load carried by the damping system is illustrated by the broken line showing a fraction of the amplitude of the sinusoidal oscillation wave. In this estimation the damping system damped the amplitude of the original oscillations to less than a third. Using larger buoys and/or more buoyancy systems may further reduce the amplitude at the load. The number of buoyancy systems, their design and/or distance from the load center of mass may be adapted to each watercraft specifically taking into account the maximal expected oscillations behavior in the expected watery environment, the design of the craft, the loads etc.

As mentioned above, the damping system of the present invention may be configured for being added to an existing watercraft or load or be integrated to the watercraft. The damping system may include any number of buoyancy systems and each buoyancy system may have any number of buoys in any possible shape and dimensions.

Many alterations and modifications may be made by those having ordinary skill in the art without departing from the scope of the invention. Therefore, it must be understood that the illustrated embodiment has been set forth only for the purposes of example and that it should not be taken as limiting the invention as defined by the following invention and its various embodiments and/or by the following claims. For example, notwithstanding the fact that the elements of a claim are set forth below in a certain combination, it must be expressly understood that the invention includes other combinations of fewer, more or different elements, which are disclosed in above even when not initially claimed in such combinations. A teaching that two elements are combined in a claimed combination is further to be understood as also allowing for a claimed combination in which the two elements are not combined with each other, but may be used alone or combined in other combinations. The excision of any disclosed element of the invention is explicitly contemplated as within the scope of the invention.

The words used in this specification to describe the invention and its various embodiments are to be understood not only in the sense of their commonly defined meanings, but to include by special definition in this specification structure, material or acts beyond the scope of the commonly defined meanings. Thus if an element can be understood in the context of this specification as including more than one meaning, then its use in a claim must be understood as being generic to all possible meanings supported by the specification and by the word itself.

The definitions of the words or elements of the following claims are, therefore, defined in this specification to include not only the combination of elements which are literally set forth, but all equivalent structure, material or acts for performing substantially the same function in substantially the same way to obtain substantially the same result. In this sense it is therefore contemplated that an equivalent substitution of two or more elements may be made for any one of the elements in the claims below or that a single element may be substituted for two or more elements in a claim. Although elements may be described above as acting in certain combinations and even initially claimed as such, it is to be expressly understood that one or more elements from a claimed combination can in some cases be excised from the combination and that the claimed combination may be directed to a sub-combination or variation of a sub-combination.

Insubstantial changes from the claimed subject matter as viewed by a person with ordinary skill in the art, now known or later devised, are expressly contemplated as being equivalently within the scope of the claims. Therefore, obvious substitutions now or later known to one with ordinary skill in the art are defined to be within the scope of the defined elements.

## Claims

1. A damping system for damping an oscillation of a vehicle unit (320) on a fluctuant water surface, wherein a direction of travel defines a front, a back, and sides of the vehicle unit (320) and corresponding front, rear, and side elements of the damping system, the damping system comprising two buoyancy systems (310a, 310b), connectable to each side of the vehicle unit (320) and located opposite to one another, each buoyancy system (310a, 310b) comprising:
a front pair of buoys (313a, 314a; 313b, 314b) and a rear pair of buoys (311a, 312a; 311b, 312b), each pair of buoys connected by a lower frame (331a, 332a, 331b, 332b) of the buoyancy system to an upper frame (341a, 342a, 341b, 342b) of the buoyancy system, each buoy being pivotally connected to its lower frame by a buoy axle (41a, 42a, 43a, 44a, 41b, 42b, 43b, 44b), each lower frame being pivotally connected to its upper frame by a lower frame hinge (321a, 322a, 321b, 322b), each upper frame being connected to a central connector (323a, 323b) of the buoyancy system (310a, 310b) that is connectable to the vehicle unit (320), and wherein the buoys of each buoyancy system (310a, 310b) are arranged in line one after each other in the direction of travel, wherein each buoy is of the same oval shape and size, wherein the upper frames (341a, 342a, 341b, 342b) and the lower frame hinges (321a, 322a, 321b, 322b) are above the lower frames (331a, 332a, 331b, 332b) and their buoy axles (41a, 42a, 43a, 44a, 41b, 42b, 43b, 44b), and wherein, when the damping system is connected to the vehicle unit (320), each buoyancy system (310a, 310b) extends further forward than the front of the vehicle unit (320) and each buoyancy system (310a, 310b) extends further back than the back of the vehicle unit (320).

2. The damping system of claim 1, wherein one or more of the upper frames (341a, 342a, 341b, 342b) are rigidly or pivotally connectable to the vehicle unit (320) by its respective central connector.

3. The damping system of claim 2, wherein an angular position of the central connector is controlled by mechanical or electronic means.

4. The damping system of claim 1, further configured such that the buoyancy systems are located at an equal distance from the center of mass of the vehicle unit (320) when the damping system is connected to the vehicle unit (320).

5. The damping system of claim 1, further configured such that the buoyancy systems are symmetrically located about the center of mass of the damping system.

6. The damping system of claim 1, further configured such that the buoyancy systems are located at unequal distances from the center of mass of the vehicle unit (320) when the damping system is connected to the vehicle unit (320).

7. The damping system of claim 1, wherein a distance between the buoyancy systems is adapted for damping an expected wavelength of oscillation.

8. A watercraft (300) designed for damping an oscillation of a vehicle (320) on a fluctuant water surface, the watercraft comprising: the vehicle unit (320) and a damping system according to one of the claims 1 to 7.

## Patentansprüche

1. Dämpfungssystem zum Dämpfen einer Schwingung einer Fahrzeugeinheit (320) auf einer fluktuierenden Wasseroberfläche, wobei eine Fahrtrichtung eine Vorderseite, eine Rückseite und Seiten der Fahrzeugeinheit (320) und entsprechende vordere, hintere und seitliche Elemente des Dämpfungssystems definiert, wobei das Dämpfungssystem zwei Auftriebssysteme (310a, 310b) umfasst, die mit jeder Seite der Fahrzeugeinheit (320) verbindbar und einander gegenüberliegend angeordnet sind, wobei jedes Auftriebssystem (310a, 310b) umfasst:
ein vorderes Paar von Bojen (313a, 314a; 313b, 314b) und ein hinteres Paar von Bojen (311a, 312a; 311b, 312b), wobei jedes Bojenpaar durch einen unteren Rahmen (331a, 332a, 331b, 332b) des Auftriebssystems mit einem oberen Rahmen (341a, 342a, 341b, 342b) des Auftriebssystems verbunden ist, wobei jede Boje durch eine Bojenachse (41a, 42a, 43a, 44a, 41b, 42b, 43b, 44b) schwenkbar mit ihrem unteren Rahmen verbunden ist, jeder untere Rahmen über ein unteres Rahmenscharnier (321a, 322a, 321b, 322b) schwenkbar mit seinem oberen Rahmen verbunden ist, jeder obere Rahmen mit einem zentralen Verbinder (323a, 323b) des Auftriebssystems (310a, 310b) verbunden ist, der mit der Fahrzeugeinheit (320) verbindbar ist, und wobei die Bojen eines jeden Auftriebssystems (310a, 310b) in Fahrtrichtung hintereinander angeordnet sind, wobei jede Boje die gleiche ovale Form und Größe aufweist, wobei die oberen Rahmen (341a, 342a, 341b, 342b) und die unteren Rahmengelenke (321a, 322a, 321b, 322b) über den unteren Rahmen (331a, 332a, 331b, 332b) und deren Bojenachsen (41a, 42a, 43a, 44a, 41b, 42b, 43b, 44b) sind, und wobei, wenn das Dämpfungssystem mit der Fahrzeugeinheit (320) verbunden ist, jedes Auftriebssystem (310a, 310b) sich weiter nach vorne erstreckt als die Vorderseite der Fahrzeugeinheit (320) und jedes Auftriebssystem (310a, 310b) sich weiter nach hinten erstreckt als die Rückseite der Fahrzeugeinheit (320).

2. Dämpfungssystem nach Anspruch 1, wobei einer oder mehrere der oberen Rahmen (341a, 342a, 341b, 342b) durch ihren jeweiligen zentralen Verbinder starr oder schwenkbar mit der Fahrzeugeinheit (320) verbunden werden können.

3. Dämpfungssystem nach Anspruch 2, wobei eine Winkelposition des zentralen Verbinders durch mechanische oder elektronische Mittel gesteuert wird.

4. Dämpfungssystem nach Anspruch 1, das derart eingerichtet ist, dass sich die Auftriebssysteme in einem gleichen Abstand vom Massenschwerpunkt der Fahrzeugeinheit (320) befinden, wenn das Dämpfungssystem mit der Fahrzeugeinheit (320) verbunden ist.

5. Dämpfungssystem nach Anspruch 1, ferner derart eingerichtet, dass die Auftriebssysteme symmetrisch um den Massenschwerpunkt des Dämpfungssystems angeordnet sind.

6. Dämpfungssystem nach Anspruch 1, ferner derart eingerichtet, dass die Auftriebssysteme in ungleichen Abständen vom Masseschwerpunkt der Fahrzeugeinheit (320) angeordnet sind, wenn das Dämpfungssystem mit der Fahrzeugeinheit (320) verbunden ist.

7. Dämpfungssystem nach Anspruch 1, wobei ein Abstand zwischen den Auftriebssystemen derart eingerichtet ist, dass eine erwartete Wellenlänge der Schwingung gedämpft wird.

8. Wasserfahrzeug (300) zur Dämpfung einer Schwingung eines Fahrzeugs (320) auf einer fluktuierenden Wasseroberfläche, wobei das Wasserfahrzeug umfasst: die Fahrzeugeinheit (320) und ein Dämpfungssystem nach einem der Ansprüche 1 bis 7.

## Revendications

1. Système d'amortissement pour amortir une oscillation d'une unité de véhicule (320) sur une surface d'eau fluctuante, dans lequel une direction de déplacement définit un avant, un arrière et des côtés de l'unité de véhicule (320) et des éléments avant, arrière et latéraux correspondants du système d'amortissement, le système d'amortissement comprenant deux systèmes de flottabilité (310a, 310b), pouvant être connectés à chaque côté de l'unité de véhicule (320) et situés à l'opposé l'un de l'autre, chaque système de flottabilité (310a, 310b) comprenant :
une paire de bouées avant (313a, 314a ; 313b, 314b) et une paire de bouées arrière (311a, 312a ; 311b, 312b), chaque paire de bouées étant reliée par un cadre inférieur (331a, 332a, 331b, 332b) du système de flottabilité à un cadre supérieur (341a, 342a, 341b, 342b) du système de flottabilité, chaque bouée étant reliée de manière pivotante à son cadre inférieur par un axe de bouée (41a, 42a, 43a, 44a, 41b, 42b, 43b, 44b), chaque cadre inférieur étant relié de manière pivotante à son cadre supérieur par une charnière de cadre inférieur (321a, 322a, 321b, 322b), chaque cadre supérieur étant relié à un connecteur central (323a, 323b) du système de flottabilité (310a, 310b) qui peut être relié à l'unité de véhicule (320), et les bouées de chaque système de flottabilité (310a, 310b) étant disposées en ligne l'une derrière l'autre dans la direction de déplacement, chaque bouée a la même forme ovale et la même taille, les cadres supérieurs (34a, 342a, 341b, 342b) et les charnières de cadre inférieur (321a, 322a, 321b, 322b) étant au-dessus des cadres inférieurs (331a, 332a, 331b, 332b) et de leurs axes de bouée (41a, 42a, 43a, 44a, 41b, 42b, 43b, 44b), et, lorsque le système d'amortissement est relié à l'unité de véhicule (320), chaque système de flottabilité (310a, 310b) s'étend plus en avant que l'avant de l'unité de véhicule (320) et chaque système de flottabilité (310a, 310b) s'étend plus en arrière que l'arrière de l'unité de véhicule (320).

2. Système d'amortissement selon la revendication 1, dans lequel un ou plusieurs des cadres supérieurs (341a, 342a, 341b, 342b) peuvent être reliés de manière rigide ou pivotante à l'unité de véhicule (320) par son connecteur central respectif.

3. Système d'amortissement selon la revendication 2, dans lequel une position angulaire du connecteur central est contrôlée par des moyens mécaniques ou électroniques.

4. Système d'amortissement selon la revendication 1, configuré en outre de telle sorte que les systèmes de flottabilité sont situés à une distance égale du centre de masse de l'unité de véhicule (320) lorsque le système d'amortissement est connecté à l'unité de véhicule (320).

5. Système d'amortissement selon la revendication 1, configuré en outre de telle sorte que les systèmes de flottabilité sont situés symétriquement autour du centre de masse du système d'amortissement.

6. Système d'amortissement selon la revendication 1, configuré en outre de telle sorte que les systèmes de flottabilité sont situés à des distances inégales du centre de masse de l'unité de véhicule (320) lorsque le système d'amortissement est relié à l'unité de véhicule (320).

7. Système d'amortissement selon la revendication 1, dans lequel une distance entre les systèmes de flottabilité est adaptée pour amortir une longueur d'onde d'oscillation attendue.

8. Embarcation (300) conçue pour amortir une oscillation d'un véhicule (320) sur une surface d'eau fluctuante, l'embarcation comprenant : l'unité de véhicule (320) et un système d'amortissement selon l'une des revendications 1 à 7.
